# EUROPEAN PATENT SPECIFICATION

(11) **EP 4 216 303 B1**
(45) Date of publication and mention of the grant of the patent: **02.09.2026**
(21) Application number: 23152444.8
(22) Date of filing: 19.01.2023
(51) Int. Cl.: H01M 4/133, H01M 4/134, H01M 4/38, H01M 4/587, H01M 10/04, H01M 10/052, H01M 10/0562, H01M 10/0585

(54) **UNIT STACK-CELL STRUCTURE AND ALL-SOLID-STATE SECONDARY BATTERY INCLUDING THE SAME**
EINHEITENSTAPELZELLENSTRUKTUR UND FESTKÖRPERSEKUNDÄRBATTERIE DAMIT
STRUCTURE DE CELLULE D'EMPILEMENT UNITAIRE ET BATTERIE SECONDAIRE ENTIÈREMENT SOLIDE LA COMPRENANT

(30) Priority: 20.01.2022 KR 20220008687
(43) Date of publication of application: 26.07.2023
(73) Proprietor: Samsung SDI Co., Ltd., Yongin-si, Gyeonggi-do 17084 (KR)
(72) Inventor: Cho, Ikhwan, Yongin-si, Gyeonggi-do 17084 (KR); Kim, Taejung, Yongin-si, Gyeonggi-do 17084 (KR); Park, Jinhwan, Yongin-si, Gyeonggi-do 17084 (KR); Choi, Bokkyu, Yongin-si, Gyeonggi-do 17084 (KR)
(74) Representative: Gulde & Partner

(56) References cited:
- EP-A1- 3 989 322
- US-A1- 2020 403 270

## Description

### BACKGROUND

### 1. Field

Embodiments relate to a unit stack-cell structure and an all-solid-state secondary battery including the same.

### 2. Description of the Related Art

Recently, the development of batteries with high energy density and safety has been actively carried out in response to industrial demands. For example, lithium-ion batteries may be used not only in the fields of information-related devices and communication devices, but also in the fields of automobiles. In the field of automobiles, safety is especially considered important as being related to life.

Some lithium-ion batteries may use an electrolyte containing a flammable organic solvent, and there is a possibility of overheating and fire if a short circuit were to occur. In this regard, an all-solid-state secondary battery using a solid electrolyte instead of a liquid electrolyte has been considered. An all-solid-state battery does not use a flammable organic solvent, the possibility of fire or explosion may be significantly reduced even if a short circuit were to occur. Therefore, such an all-solid-state secondary battery may significantly increase stability compared to a lithium-ion battery using a liquid electrolyte.

US 2020/0403270 A1 provides an all solid-state battery comprising a power generation element including a cathode, a solid electrolyte layer, and an anode, in this order. The battery further comprises an exterior body storing the power generation element. The anode includes at least an anode current collector, and the anode current collector includes a current collection part, and an elastic part placed on other side of the solid electrolyte layer, with respect to the current collection part. The elastic modulus of the elastic part is 100 MPa or less and a confining pressure is not particularly limited.

### SUMMARY

The invention is defined by the appended claims. The embodiments is realized by providing a unit stack-cell structure, including a plurality of stacked unit cells, each unit cell of the plurality of stacked unit cells including a laminate in which a cathode layer; a solid electrolyte layer; an anode layer; and an elastic layer are sequentially arranged, wherein the elastic layer has a compressive strength of greater than or equal to about 0.28 MPa and less than about 0.6 MPa in a compressibility interval in a range of 40 % to 70 %.

The elastic layer may have a compressive strength of greater than or equal to about 0.28 MPa and less or equal to about 0.35 MPa at compressibility of about 40 %.

The elastic layer may have a stress relaxation rate in a range of about 5 % to about 20 %, a recovery rate of greater than or equal to about 60 %, and a sum of the stress relaxation rate and the recovery rate is in a range of about 78 % to about 95 %.

The elastic layer may have a stress relaxation rate in a range of about 6.5 % to about 15 %.

The elastic layer may have a recovery rate of greater than or equal to about 70 %.

The elastic layer may be a compressive pad consisting of an elastic material.

The elastic material may include a polyurethane, natural rubber, spandex, butyl rubber, isobutylene isoprene rubber (IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, or a copolymer thereof.

The elastic layer may be a compressive pad to which pressure is applied to have a thickness of about 40 % to about 90 % of the initial thickness before the pressure is applied.

A thickness of the elastic layer may be in a range of about 200 % to about 500 % of a thickness of a lithium precipitation layer formed in the anode layer during charging of an all-solid secondary battery.

The solid electrolyte layer may include a sulfide solid electrolyte.

The sulfide solid electrolyte may include Li₂S-P₂S₅, Li₂S-P₂S₅-LiX, in which X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, in which m and n are each a positive number, and Z is Ge, Zn, or Ga, Li₂S-GeS₂, Li₂S-SiS₂-Li₃PO₄, Li₂S-SiS₂-LiₚMO_{q}, in which p and q are each a positive number, and M is P, Si, Ge, B, Al, Ga, or In, Li₇₋ₓPS₆₋ₓClₓ, 0≤x≤2, Li₇₋ₓPS₆₋ₓBrₓ, in which 0≤x≤2, or Li₇₋ₓPS₆₋ₓIₓ, in which 0≤x≤2.

The sulfide solid electrolyte may be an argyrodite-type sulfide solid electrolyte including Li₆PS₅Cl, Li₆PS₅Br, or Li₆PS₅I.

The anode layer may include an anode active material and a binder, the anode active material may have a particle shape, and the anode active material may have an average particle diameter of equal to or less than about 4 µm.

The anode active material may include a carbon anode active material or a metallic or metalloid anode active material, the carbon anode active material may include amorphous carbon, and the metallic or metalloid anode active material may include gold (Au), platinum (Pt), palladium (Pd), silicon (Si), silver (Ag), aluminum (Al), bismuth (Bi), tin (Sn), or zinc (Zn).

The anode active material may include a mixture of a first particle including amorphous carbon and a second particle including a metal or a metalloid, and an amount of the second particle may be in a range of about 8 wt% to about 60 wt%, based on a total weight of the mixture.

The unit stack-cell structure may have a structure in which a plurality of bi-cells are stacked, and in each bi-cell, a pair of unit cells may be symmetrically arranged on both sides of a cathode current collector.

The embodiments may be realized by providing an all-solid-state secondary battery including a plurality of the stacked unit stack-cell structures according to an embodiment, wherein the stacked unit stack-cell structures are bipolarly connected to each other.

### BRIEF DESCRIPTION OF THE DRAWINGS

Features will be apparent to those of skill in the art by describing in detail exemplary embodiments with reference to the attached drawings in which:
FIG. 1 is a schematic cross-sectional view of a unit stack-cell structure according to an embodiment;
FIG. 2 is a schematic cross-sectional view of a unit stack-cell structure according to another embodiment; and
FIG. 3 is a schematic cross-sectional view of a unit cell included in a unit stack-cell structure according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "or" and "and/or" are not exclusive terms, and include any and all combinations of one or more of the associated listed items. Expressions such as "at least one of," when preceding a list of elements, modify the entire list of elements and do not modify the individual elements of the list.

The terms used herein is for the purpose of describing particular embodiments only and is not intended to be limiting. Singular expressions include plural expressions unless the context clearly indicates otherwise. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the slash "/" includes any and all combinations of one or more of the associated listed items.

Although the terms "first", "second", "third", etc., may be used herein to describe various elements, components, regions, and/or layers, these elements, components, regions, and/or layers should not be limited by these terms, e.g., are not intended to imply or require sequential inclusion. These terms are used only to distinguish one component from another, not for purposes of limitation.

In an all-solid-state secondary battery, the coulombic efficiency may be lowered by a thickness variation of an anode active material layer due to charging and discharging. If thickness of the anode active material layer were to increase during charging, stress could be applied to a solid electrolyte layer and an anode current collector, and thus an electrode reaction could occur in this state. In the state in which the stress is applied, an ion conduction path and an electron conduction path may be easily secured even when a contact between a solid electrolyte layer and an anode current collector, i.e., between solids, is not in a good state. If thickness of an anode active material layer were to decrease during discharging, stress may be rather relieved, and thus a contact state between solids could be deteriorated. As a result, in an all-solid-state secondary battery, an ion conduction path and an electron conduction path may be easily interrupted, and thus the coulombic efficiency could be lowered.

Accordingly, the followability of an anode current collector may be considered. In an implementation, the poor contact state between solids may be suppressed by improving the followability of an anode current collector against a thickness variation of an anode active material layer even in the case of the thickness variation by charging and discharging.

Hereinafter, a unit stack-cell structure according to embodiments and an all-solid-state secondary battery including the same will be described in more detail.

### [Unit stack-cell structure]

An aspect of the present disclosure provides a unit stack-cell structure including a plurality of stacked unit cells.

In an implementation, each stacked unit cell may include, e.g., a laminate in which a cathode layer; a solid electrolyte layer; an anode layer; and an elastic layer are sequentially arranged.

The elastic layer has a compressive strength of greater than or equal to 0.28 MPa and less than 0.6 MPa.

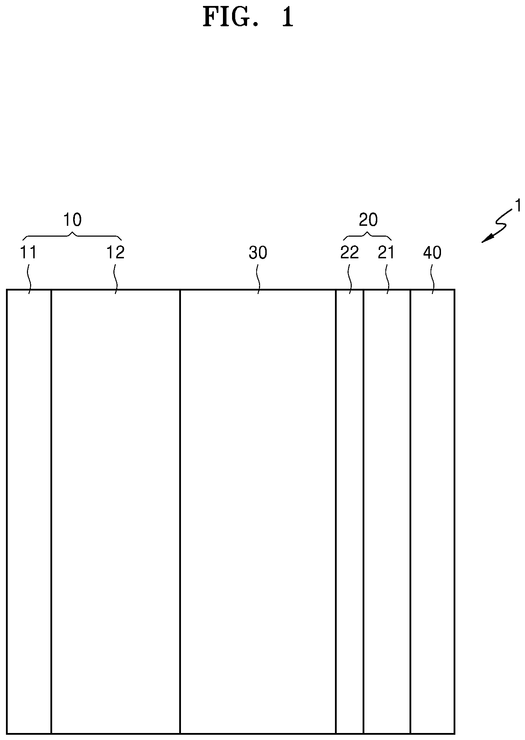

FIG. 1 is a schematic diagram showing a structure of a unit cell included in a unit stack-cell structure according to an embodiment.

Referring to FIG. 1, a unit cell 1 may include a laminate in which a cathode layer 10, a solid electrolyte layer 30, an anode layer 20, and an elastic layer 40 are sequentially arranged. The cathode layer 10 may include a cathode current collector 11 and a cathode active material layer 12 on the cathode current collector 11. The anode layer 20 may include an anode current collector 21 and an anode active material layer 22 on the anode current collector 21.

In an implementation, the unit cell 1 included in a unit stack-cell structure may include, on the anode layer 20, the elastic layer 40 having a compressive strength of greater than or equal to about 0.28 MPa and less than about 0.6 MPa, thereby increasing the coulombic efficiency of an all-solid-state secondary battery including the unit stack-cell structure including the unit cell 1. Even in the case of a thickness variation of the anode active material layer 22 by charging and discharging, the unit cell 1 including the elastic layer 40 may improve the followability of the anode current collector 21 in a good condition, and thus deterioration of a contact between solids, i.e., the solid electrolyte layer 30 and the anode current collector 21, may be suppressed. Accordingly, an all-solid-state secondary battery having high coulombic efficiency may be provided. In an implementation, the elastic layer 40 may be on a side of the anode current collector 21, which is opposite side with respect to the solid electrolyte layer 30, and this may help prevent a deterioration of the elastic layer 40 due to a reaction with lithium of the anode layer 20. Accordingly, the coulombic efficiency of the all-solid secondary battery may be also increased.

In an implementation, the unit stack-cell structure may have a structure in which a plurality of bi-cells are stacked, each including a pair of the unit cells that are symmetrically arranged on both sides of the cathode current collector 11. Here, the bi-cells may be connected by a bipolar configuration. As such, when a plurality of bi-cells are stacked, the elastic layer 40 may be arranged between adjacent bi-cells, so that a volume change of the anode layer 20 within the unit stack-cell structure may be absorbed. In the unit stack-cell structure, the elastic layer 40 capable of absorbing the volume change of the anode layer 20 may be included, a volume change of the entire cell may be suppressed to obtain a stable lifetime, and both the stack and bipolar structures may be available so that capacity and voltage of the unit stack-cell structure may be freely set.

Hereafter, each component will be described.

### [Elastic layer]

On the anode layer 20 of the unit cell 1, the elastic layer 40 having a compressive strength of greater than or equal to about 0.28 MPa and less than about 0.6 MPa may be arranged.

The compressive strength of the elastic layer 40 is at a compressibility interval between 40 % and 70 %, greater than or equal to 0.28 MPa and less than 0.6 MPa, and may be greater than or equal to about 0.28 MPa and less than about 0.5 MPa, greater than or equal to about 0.28 MPa and less than about 0.4 MPa or greater than or equal to about 0.28 MPa and less than about 0.35 MPa. In an implementation, the compressive strength at the compressibility of 40 % may be greater than or equal to about 0.28 MPa and less than or equal to about 0.5 MPa, e.g., greater than or equal to about 0.28 MPa and less than or equal to about 0.4 MPa, or greater than or equal to 0.28 MPa and less than or equal to 0.35 MPa. If the compressive strength of the elastic layer 40 were to be less than about 0.28 MPa, the rigidity against pressure applied in the compression direction could insufficient. Thus, when a unit stack-cell structure is assembled and compressed, an elastic layer may be compressed by 40 % or more so that an even surface pressure force cannot be obtained. Also, as being overcompressed, a high pressure may be transmitted in the charging/discharging environment of the all-solid-state battery, thereby causing a short circuit or the like. If the compressive strength of the elastic layer 40 at the compressibility interval of 70 % were to be greater than about 0.6 MPa, an interfacial resistance at an interface between solids may not be reduced due to an uneven surface pressure force when an all-solid-state battery structure is assembled and compressed. Accordingly, a short circuit or an adverse effect on a lifespan could occur. In this regard, when the compressive strength of the elastic layer 40 is greater than or equal to about 0.28 MPa and less than about 0.6 MPa, an all-solid-state secondary battery may be provided with high coulombic efficiency.

In an implementation, the elastic layer 40 may have a stress relaxation rate in a range of about 5 % to about 20 % and a recovery rate of greater than or equal to about 60 %, wherein the sum of the stress relaxation rate and the recovery rate may be in a range of about 78 % to about 95 %. Within the ranges above, stress applied to a solid electrolyte when a cell laminate is compressed may be dispersed so that the pressure may be evenly applied. Also, due to excellent recovery ability in the charging and discharging conditions, a contact surface between an anode and a solid electrolyte may be evenly compressed and discharge efficiency may be increased. In this regard, an elastic layer having high stress relaxation that is compressed according to an increase in a thickness of an anode in the charging environment may be provided.

The stress relaxation rate of the elastic layer 40 may be in a range of about 5 % to about 20 %, e.g., about 6.5 % to about 15 %. Within the ranges above, the stress may be evenly dispersed even in the thickness variation according to compression and charging/discharging of an all-solid-state secondary battery, thereby easily applying a pressure uniformly. The recovery rate of the elastic layer 40 may be greater than or equal to about 60 %, e.g., greater than or equal to about 70 % or greater than or equal to about 80 %. Within these ranges, the elastic layer 40 having excellent recovery ability in the compression direction may be provided.

In an implementation, the sum of the stress relaxation rate and the recovery rate may be in a range of about 78 % to about 95 %. If the sum of the stress relaxation rate and the recovery rate were to be less than about 78 % or greater than about 95 %, a short circuit could easily occur during charging and discharging, and accordingly, the cycle characteristics could be significantly degraded due to poor discharge efficiency.

The modulus of the elastic layer 40 may be, e.g., greater than or equal to about 0.01 MPa and less than or equal to about 5 MPa at 45 °C and 1 rad/s, and the elastic layer 40 may have a single-layer or multi-layer structure. In the case of a multi-layer structure, the elastic layer 40 may have different materials with different modulus.

In an implementation, for the materials constituting the elastic layer, a suitable material that satisfies the compressive strength under the above-described conditions and has stress relaxation properties may be used.

In an implementation, the elastic layer 40 may be a compressive pad including or consisting of an elastic material.

In an implementation, the elastic material may include, e.g., a polyurethane, natural rubber, spandex, butyl rubber (e.g., isobutylene isoprene rubber, IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, or a copolymer thereof.

In an implementation, the elastic material constituting the elastic layer 40 may include, e.g., silicone rubber, cellulose fiber, polyolefin resin, polyurethane resin, acryl resin, or the like.

The elastic layer 40 may be compressed in a way that a thickness thereof at the time of installation is 40 % to 90 % of the initial thickness before applying the pressure. In an implementation, the elastic layer 40 may be compressed in a way that the thickness thereof at the time of installation is, e.g., 50 % to 85 %, 60 % to 80 %, or 65 % to 75 %, of the initial thickness before applying the pressure. Within these ranges, a volume change of the anode may be effectively absorbed, so that the all-solid-state battery may be smoothly charged and discharged.

In an implementation, the thickness of the elastic layer 40 may be in a range of, e.g., about 200 % to about 1,000 % of a thickness of a lithium precipitation layer that is formed in the anode during charging of the all-solid-state secondary battery. In the all-solid-state secondary battery, the thickness of the lithium precipitation layer of the anode may be determined in proportion to the current density of the cathode. In an implementation, the thickness of the lithium precipitation layer of the anode may be determined according to the amount of lithium migrating from the cathode to the anode, and accordingly, the anode may undergo a volume change. In an implementation, the thickness of the elastic layer may absorb such a volume change in the anode. In an implementation, by setting the thickness of the elastic layer 40 to be in a range of about 200 % to about 1,000 % of the thickness of the lithium precipitation layer that is formed in the anode during charging of the all-solid-state battery, the volume change of the anode may be effectively absorbed. In an implementation, the thickness of the elastic layer 40 may be in a range of about 250 % to about 800 % or about 300 % to about 600 % of the thickness of the lithium precipitation layer that is formed in the anode during charging of the all-solid-state battery.

The thickness of the elastic layer 40 may be selectively set according to circumstances to be in a range of, e.g., about 50 µm to 300 µm, about 100 µm to about 150 µm, about 200 µm to about 300 µm, or about 50 µm to about 100 µm.

As such, when the elastic layer 40 is installed on the anode layer 20, the volume change due to a lithium deposition reaction in the anode may be absorbed, thereby suppressing an overall volume change in the entire cell, and facilitating obtaining a stable lifespan.

### [Cathode layer]

The cathode layer 10 may include a cathode current collector 11 and a cathode active material layer 12 on the cathode current collector 11.

### [Cathode layer: Cathode current collector]

The cathode current collector 11 may be, e.g., in the form of a plate or a foil, each consisting of or including indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In an implementation, the cathode current collector 11 may be omitted.

### [Cathode layer: Cathode active material]

The cathode active material layer 12 may include, e.g., a cathode active material and a solid electrolyte. The solid electrolyte included in the cathode layer 10 may be similar to or different from a solid electrolyte included in the solid electrolyte layer 30. Details on the solid electrolyte may be understood by referring to the solid electrolyte layer 30.

The cathode active material may be capable of reversibly absorbing or desorbing lithium ions. In an implementation, the cathode active material may include, e.g., a lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium iron phosphate, or the like, nickel sulfide, copper sulfide, lithium sulfide, iron oxide, vanadium oxide, or the like. In an implementation, a suitable material available as the cathode active material may be used. The cathode active material may be used alone or in a mixture of two or more materials.

The cathode active material may include, e.g., a compound represented by one of the following formulae: LiₐA_{1-b}B'_{b}D₂ (where 0.90≤a≤1 and 0 ≤b≤0.5); LiₐE_{1-b}B'_{b}O_{2-c}D_{c} (where 0.90≤a≤1, 0≤b≤0.5, and 0≤c≤0.05); LiE_{2-b}B'_{b}O_{4-c}D_{c} (where 0 ≤b≤0.5 and 0≤c≤0.05); LiₐNi_{1-b-c}Co_{b}B'_{c}D_{α} (where 0.90 ≤a≤1, 0≤b≤0.5, 0≤c≤0.05, and 0<α≤2); LiₐNi_{1-b-c}Co_{b}B'_{c}O_{2-α}F'_{α} (where 0.90≤a≤1, 0≤b≤0.5, 0≤c≤0.05, and 0<α<2); LiₐNi_{1-b-c}Co_{b}B'_{c}O_{2-α}F'₂ (where 0.90≤a≤1, 0≤b≤0.5, 0≤c≤0.05, 0 <α<2); LiₐNi_{1-b-c}Mn_{b}B'_{c}D_{α} (where 0.90≤a≤1, 0≤b≤0.5, 0≤c≤0.05, and 0<α≤2); LiₐNi_{1-b-c}MnₚB'_{c}O_{2-α}F'_{α} (where 0.90≤a≤1, 0≤b≤0.5, 0≤c≤0.05, and 0<α<2); LiₐNi_{1-b-c}Mn_{b}B'_{c}O_{2-α}F'₂ (where 0.90≤a≤1, 0≤b≤0.5, 0≤c≤0.05, and 0<α<2); LiₐNi_{b}E_{c}G_{d}O₂ (where 0.90≤a≤1, 0≤b≤0.9, 0≤c≤0.5, and 0.001≤d≤0.1); LiₐNi_{b}Co_{c}Mn_{d}GₑO₂ (where 0.90≤a≤1, 0≤b≤0.9, 0≤c≤0.5, 0≤d≤0.5, and 0.001≤e≤0.1); LiₐNiG_{b}O₂ (where 0.90≤a≤1 and 0.001≤b≤0.1); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); QO₂; QS₂; LiQS₂; V₂O₅; LiV₂O₅; LiI'O₂; LiNiVO₄; Li_{(3-f)}J₂(PO₄)₃ (where 0≤f≤ 2); Li_{(3-f)}Fe₂(PO₄)₃ (where 0≤f≤2); and LiFePO₄. In the compound represented by one of the formulae above, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. A compound having a coating layer may be also added to the surface of the compound described above, and a mixture of the compound described above and a compound having a coating layer may be also used. Such a coating layer added to the surface of the compound described above may include, e.g., a compound of coating element such as an oxide of a coating element, hydroxide of a coating element, oxyhydroxide of a coating element, oxycarbonate of a coating element, or hydroxy carbonate of a coating element. Such a compound of coating element constituting the coating layer may be amorphous or crystalline. The coating element included in the coating layer may include, e.g., Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. A coating method may include, e.g., spray coating, dipping, or the like.

The cathode active material may include, e.g., a lithium salt of a transition metal oxide having a layered rock salt type structure, among the lithium transition metal oxides described above. The term "layered rock salt type structure" as used herein may refer to, e.g., a structure in which oxygen atomic layers and metal layers are alternately arranged regularly in the <111> direction of a cubic rock salt type structure to form a two-dimensional plane by each of the atomic layers. The term "cubic rock salt type structure" as used herein refers to a NaCl type structure which is one type of crystal structures, and may refer to a structure in which a face centered cubic lattice (fcc) formed by respective anions and cations is misaligned from each other by 1/2 of the ridge of a unit lattice. The lithium transition metal oxide having the layered rock salt type structure may be a ternary lithium transition metal oxide, e.g., LiNiₓCo_{y}Al_{z}O₂ (NCA) or LiNiₓCo_{y}Mn_{z}O₂ (NCM) (where 0<x< 1, 0<y< 1, 0<z<1, and x+y+z=1). When the cathode active material includes a ternary lithium transition metal oxide having a layered rock salt type, the all-solid-state secondary battery may have further improved energy density and thermal stability.

The cathode active material may be covered by the coating layer as described above. For use as the coating layer, a suitable coating layer for a cathode active material of an all-solid-state secondary battery may be used. The coating layer may include, e.g., Li₂O-ZrO₂ (LZO) or the like.

When the cathode active material includes, e.g., Ni as the ternary lithium transition metal oxide such as NCA or NCM, the volume density of the all-solid-state secondary battery may increase so that the metal elution of the cathode active material may be reduced in a charged state. Consequently, the cycle characteristics of the all-solid-state secondary battery may be improved.

The cathode active material may be in the form of, e.g., a globular shape or an oval sphere shape. A particle diameter of the cathode active material may be, e.g., within a range suitable for an all-solid secondary battery. An amount of the cathode active material in the cathode layer 10 may be within a range suitable for a cathode of an all-solid-state battery.

### [Cathode layer: Solid electrolyte]

The cathode active material layer 12 may include, e.g., a solid electrolyte. The solid electrolyte included in the cathode layer 10 may be similar to or different from a solid electrolyte included in the solid electrolyte layer 30. Details on the solid electrolyte may be understood by referring to the solid electrolyte layer 30.

The solid electrolyte included in the cathode active material layer 12 may have a smaller average particle diameter (D50) than the solid electrolyte included in the solid electrolyte layer 30. In an implementation, the average particle diameter D50 of the solid electrolyte included in the cathode active material layer 12 may be, e.g., less than or equal to about 90 %, less than or equal to about 80 %, less than or equal to about 70 %, less than or equal to about 60 %, less than or equal to about 50 %, less than or equal to about 40 %, less than or equal to about 30 %, or less than or equal to about 20 %, of the particle diameter D50 of the solid electrolyte included in the solid electrolyte layer 30.

### [Cathode layer: Binder]

The cathode active material layer 12 may include a binder. The binder may include, e.g., SBR, polytetrafluoroethylene, polyvinylidene fluoride, polyethylene, or the like.

### [Cathode layer: Conductive material]

The cathode active material layer 12 may include a conductive material. The conductive material may include, e.g., graphite, carbon black (CB), acetylene black (AB), ketjen black (KB), carbon fiber, metal powder, or the like.

### [Cathode layer: Other additives]

The cathode layer 10 may further include, e.g., an additive such as a filler, a coating agent, a dispersant, an ion conductive auxiliary agent, or the like, in addition to the cathode active material, the solid electrolyte, the binder, and the conductive material.

For use as a filler, a coating agent, a dispersant, an ion conductive auxiliary agent, or the like that may be included in the cathode layer 10, a suitable material generally used for an electrode of an all-solid-state battery may be used.

### [Solid electrolyte layer]

As shown in FIG. 1, the solid electrolyte layer 30 may be between the cathode layer 10 and the anode layer 20, and may include, e.g., a sulfide solid electrolyte.

### [Solid electrolyte layer: Sulfide solid electrolyte]

The sulfide solid electrolyte may include, e.g., Li₂S-P₂S₅, Li₂S-P₂S₅-LiX (in which X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ (in which m and n are positive numbers, and Z is Ge, Zn, or Ga), Li₂S-GeS₂, Li₂S-SiS₂-Li₃PO₄, Li₂S-SiS₂-LiₚMO_{q} (in which p and q are positive numbers, and M is P, Si, Ge, B, Al, Ga, or In), Li₇₋ₓPS₆₋ₓClₓ, (in which 0≤x≤2), Li₇₋ₓPS₆₋ₓBrₓ, (in which 0≤x≤2), or Li₇₋ₓPS₆₋ₓIₓ (in which 0≤x≤2). The sulfide solid electrolyte may be, e.g., prepared by treating a starting material, such as Li₂S, P₂S₅, or the like, by a melting quenching method or a mechanical milling method. Also, after such treatment, heat treatment may be performed. The solid electrolyte may be amorphous or crystalline, or may be in a mixed state. In addition, the solid electrolyte may include, e.g., sulfur (S), phosphorus (P), and lithium (Li), as at least constituent elements of the above-described sulfide solid electrolyte material. in which, the solid electrolyte may be a material including Li₂S-P₂S₅. When Li₂S-P₂S₅ is included as a sulfide solid electrolyte material for forming the solid electrolyte, a mixing molar ratio of Li₂S to P₂S₅ (Li₂S:P₂S_{S}) may be, e.g., in a range of 50:50 to about 90:10.

The sulfide solid electrolyte may be, e.g., an argyrodite-type compound including Li₇₋ₓPS₆₋ₓClₓ (in which 0≤x≤2), Li₇₋ₓPS₆₋ₓBrₓ (in which 0≤x≤2), or Li₇₋ₓPS₆₋ₓIₓ (in which 0≤x≤2). In an implementation, the sulfide solid electrolyte may include, e.g., an argyrodite-type solid electrolyte including Li₆PS₅Cl, Li₆PS₅Br, or Li₆PS₅I.

The argyrodite-type solid electrolyte may have density in a range of about 1.5 g/cc to about 2.0 g/cc. When the argyrodite-type solid electrolyte has density of greater than or equal to about 1.5 g/cc, the internal resistance of the all-solid-state secondary battery may be reduced, and penetration of the solid electrolyte by Li may be effectively suppressed.

The solid electrolyte may have elastic modulus in a range of, e.g., about 15 GPa to about 35 GPa.

### [Solid electrolyte layer: Binder]

The solid electrolyte layer 30 may include, e.g., a binder. The binder included in the solid electrolyte layer 30 may include, e.g., SBR, polytetrafluoroethylene, polyvinylidene fluoride, polyethylene, or the like. A suitable material available as a binder may be used. The binder included in the solid electrolyte layer 30 may be the same as or different from the binders included in the cathode active material layer 12 and the anode active material layer 22.

### [Anode layer]

### [Anode layer: Anode active material]

The anode active material layer 22 may include, e.g., an anode active material and a binder.

The anode active material included in the anode active material layer 22 may have, e.g., a particle shape. An average particle diameter of the anode active material having a particle shape may be, e.g., less than or equal to about 4 µm, less than or equal to about 2 µm, less than or equal to about 1 µm, or less than or equal to about 900 nm. In an implementation, an average particle diameter of the anode active material having a particle shape may be, e.g., in a range of about 10 nm to about 4 mm, about 10 nm to about 3 mm, about 10 nm to about 2 mm, about 10 nm to about 1mm, or about 10 nm to about 900 nm. When the anode active material has the average particle diameter within the ranges above, lithium may be further easily subjected to reversible absorbing and/or desorbing during charge and discharge. The average particle diameter of the anode active material may be, e.g., a median diameter D50 measured by using a laser particle size distribution meter.

The anode active material included in the anode active material layer 22 may include, e.g., a carbon anode active material or a metal or metalloid anode active material.

The carbon anode active material may include, e.g., amorphous carbon. The amorphous carbon may include, e.g., CB, AB, furnace black (FB), KB, graphene, or the like. A suitable material available as amorphous carbon may be used. The amorphous carbon may be carbon that does not have crystallinity or has very low crystallinity, and in this regard, may be distinguished from crystalline carbon or graphite carbon.

The metal or metalloid anode active material may include, e.g., Au, Pt, Pd, Si, Ag, Al, Bi, Sn, or Zn. A suitable material as a metal or metalloid anode active material capable of forming an alloy or compound with lithium may be used. Ni may not form an alloy with lithium, and it may not be used a metal anode active material.

The anode active material layer 22 may include a kind of anode active material from among the anode active materials described above, or a mixture of multiple different anode active materials. In an implementation, the anode active material layer 22 may include only amorphous carbon, or Au, Pt, Pd, Si, Ag, Al, Bi, Sn, or Zn. In an implementation, the anode active material layer 22 may include a mixture of amorphous carbon with Au, Pt, Pd, Si, Ag, Al, Bi, Sn, or Zn. In an implementation, a mixing ratio of the amorphous carbon to Au or the like in the mixture may be, e.g., in a range of about 10:1 to about 1:2, about 5:1 to about 1:1, or about 4:1 to about 2:1. The mixing ratio may be determined depending on the desired characteristics of the all-solid-state secondary battery. When the anode active material has such a composition, the cycle characteristics of the all-solid-state secondary battery may be further improved.

The anode active material included in the first anode active material layer 22 may include, e.g., a mixture of a first particle including amorphous carbon and a second particle including a metal or metalloid. The metal or metalloid may include, e.g., Au, Pt, Pd, Si, Ag, Al, Bi, Sn, Zn, or the like. The metalloid may be, e.g., a semiconductor. An amount of the second particle may be in a range of, e.g., about 8 wt% to about 60 wt%, about 10 wt% to about 50 wt%, about 15 wt% to about 40 wt%, or about 20 wt% to about 30 wt%, based on the total weight of the mixture. When the amount of the second particle is within the ranges above, the cycle characteristics of the all-solid-state secondary battery may be further improved.

### [Anode layer: Binder]

The binder included in the anode active material layer 22 may include, e.g., SBR, polytetrafluoroethylene, polyvinylidene fluoride, polyethylene, vinylidene fluoride/hexafluoropropylene copolymer, polyacrylonitrile, polymethyl methacrylate, or the like. A suitable material available as a binder may be used. The binder may be used alone, or may be used with a plurality of different binders.

When the anode active material layer 22 includes the binder, the anode active material layer 22 may be stabilized on the anode current collector 21. In an implementation, despite a change in volume and/or relative position of the anode active material layer 22 during charge and discharge, cracking of the anode active material layer 22 may be suppressed. If the binder were omitted, the anode active material layer 22 could be easily separated from the anode current collector 21. At a portion where the anode current collector 21 is exposed by the separation of the anode active material layer 22 from the anode current collector 21, the possibility of occurrence of a short circuit could increase as the anode current collector 21 may be in contact with the solid electrolyte layer 30. The anode active material layer 22 may be prepared by, e.g., coating the anode current collector 21 with a slurry in which a material constituting the anode active material layer 22 is dispersed, and then drying the coated anode current collector 21. The inclusion of the binder in the anode active material layer 22 may facilitate stable dispersion of the anode active material in the slurry. In an implementation, when the slurry is applied on the anode current collector 21 by a screen printing method, clogging of the screen (e.g., clogging by an agglomerate of the anode active material) may be suppressed.

### [Anode layer: Other additives]

The anode active material layer 22 may further include an additive, e.g., a filler, a coating agent, a dispersant, an ion conductive auxiliary agent, or the like.

### [Structure of anode layer]

A thickness of the anode active material layer 22 may be, e.g., less than or equal to about 50 %, less than or equal to about 40 %, less than or equal to about 30 %, less than or equal to about 20 %, less than or equal to about 10 %, or less than or equal to about 5 %, of the thickness of the cathode active material layer 12. The thickness of the anode active material layer 22 may be, e.g., in a range of about 1 µm to about 20 µm, about 2 µm to about 10 µm, or about 3 µm to about 7 µm. If the anode active material layer 22 were to be too thin, lithium dendrites formed between the anode active material layer 22 and the anode current collector 21 could collapse the anode active material layer 22, so that the cycle characteristics of the all-solid-state secondary battery could be difficult to improve. If the anode active material layer 22 were to be too thick, the energy density of the all-solid-state secondary battery could be lowered and the internal resistance of the all-solid-state secondary battery by the anode active material layer 22 could be increased, so that the cycle characteristics of the all-solid-state secondary battery could also be difficult to improve.

When the thickness of the anode active material layer 22 is decreased, e.g., the charging capacity of the anode active material layer 22 may be also decreased. The charging capacity of the anode active material layer 22 may be, e.g., less than or equal to about 50 %, less than or equal to about 40 %, less than or equal to about 30 %, less than or equal to about 20 % or, less than or equal to about 10 %, or less than or equal to about 5 %, of the charging capacity of the cathode active material layer 12. The charging capacity of the anode active material layer 22 may be, e.g., in a range of about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 %, with respect to the charging capacity of the cathode active material layer 12. If the charging capacity of the anode active material layer 22 were to be significantly small, the anode active material layer 22 could become very thin. In this regard, lithium dendrites formed between the anode active material layer 22 and the anode current collector 21 during a repeated charging and discharging process could collapse the anode active material layer 22, and thus the cycle characteristics of the all-solid-state secondary battery could be difficult to improve. If the charging capacity of anode active material layer 22 were to be significantly increased, the energy density of the all-solid-state secondary battery could be lowered and the internal resistance of the all-solid-state secondary battery by the anode active material layer 22 could be increased, so that the cycle characteristics of the all-solid-state secondary battery could also be difficult to improve.

The charging capacity of the cathode active material layer 12 may be obtained by multiplying the charging capacity density (mAh/g) of the cathode active material by the mass of the cathode active material in the cathode active material layer 12. When several types of the cathode active material are used, the charging capacity density is multiplied by the mass for each cathode active material, and the sum of these values is the charging capacity of the cathode active material layer 12. The charging capacity of the anode active material layer 22 is calculated in the same way. In an implementation, the charging capacity of the anode active material layer 22 may be obtained by multiplying the charging capacity density (mAh/g) of the anode active material by the mass of the anode active material in anode active material layer 22. When several types of the anode active material are used, the charging capacity density is multiplied by the mass for each anode active material, and the sum of these values is the charging capacity of the anode active material layer 22. Here, the charge capacity densities of the cathode active material and the anode active material are capacities estimated using an all-solid-state half-cell using lithium metal as a counter electrode. The charging capacities of the cathode active material layer 12 and the anode active material layer 22 may be directly measured by measuring the charging capacity using the all-solid-state half-cell. When the measured charge capacity is divided by the mass of each active material, the charging capacity density is obtained. Alternatively, the charging capacities of the cathode active material layer 12 and the anode active material layer 22 may be initial charging capacity measured during the first cycle.

### [Anode layer: Anode current collector]

The anode current collector 21 may be formed of, e.g., a material that does not react with lithium, or a material that forms neither an alloy nor a compound with lithium. Such a material for forming the anode current collector 21 may include, e.g., Cu, stainless steel, Ti, Fe, Co, Ni, or the like. A suitable material available as an anode current collector may be used. A thickness of the anode current collector 21 may be in a range of, e.g., about 1 µm to about 20 µm, for example, about 5 µm to about 15 µm, and for example, about 7 µm to about 10 µm.

The anode current collector 21 may be formed of one of the above-described metals, a coating material, or an alloy of two or more metals. The anode current collector 21 may be, e.g., in the form of a plate or foil.

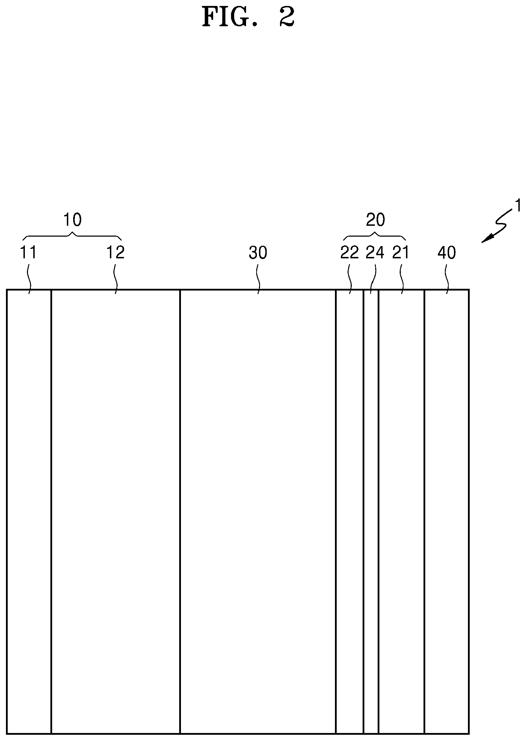

Referring to FIG. 2, the unit cell 1 of the unit stack-cell structure may further include, e.g., a thin film 24 including an element capable of forming an alloy with lithium on the anode current collector 21. The thin film 24 may be between the anode current collector 21 and the anode active material layer 22. The thin film 24 may include, e.g., an element capable of forming an alloy with lithium. The element capable of forming an alloy with lithium may include, e.g., gold, silver, zinc, tin, indium, silicon, aluminum, bismuth, or the like. A suitable material available as an element capable of forming an alloy with lithium may be used. The thin film 24 may be formed of one of these metals or an alloy of several types of metals. By arranging the thin film 24 on the anode current collector 21, e.g., a precipitated shape of a second anode active material layer precipitated between the thin film 24 and the anode active material layer 22 may be further flattened, thereby further improving the cyclic characteristics of the all-solid-state secondary battery.

A thickness of the thin film 24 may be, e.g., in a range of about 1 nm to about 800 nm, about 10 nm to about 700 nm, about 50 nm to about 600 nm, or about 100 nm to about 500 nm. If the thickness of the thin film 24 were to be less than about 1 nm, a function by the thin film 24 may not be exhibited. If the thin film 24 were to be too thick, the thin film 24 itself could occlude lithium so that an amount of lithium precipitated in the anode layer 20 may decrease, thereby lowering the energy density of the all-solid-state secondary battery and accordingly deteriorating the cycle characteristics of the all-solid-state secondary battery. The thin film 24 may be arranged on the anode current collector 21 by, e.g., a vacuum deposition method, a sputtering method, a plating method, or the like. A suitable method capable of forming the thin film 24 may be used.

### [Anode layer: Second anode active material]

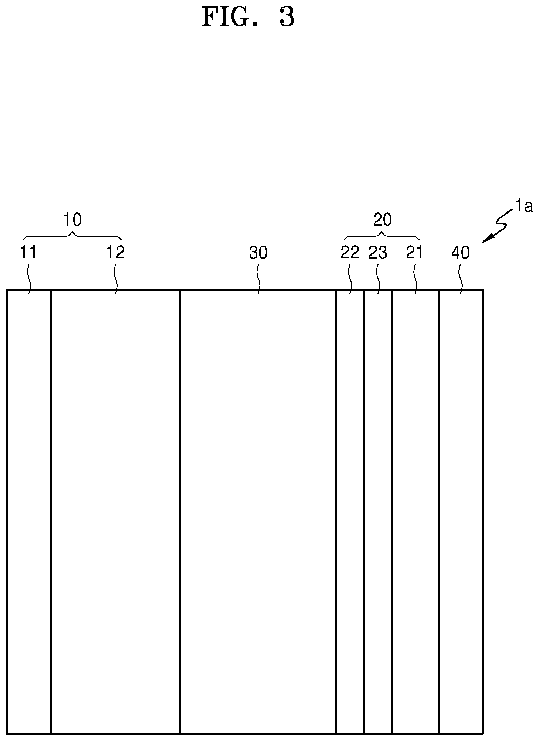

Referring to FIG. 3, an all-solid-state secondary battery including a unit stack-cell structure including a unit cell 1a may further include a second anode active material layer 23 between the anode current collector 21 and the anode active material layer 22. The second anode active material layer 23 may be a metal layer including Li or a Li alloy. In an implementation, the second anode active material layer 23 is a metal layer including Li or a Li alloy, it may serve as, e.g., a Li reservoir. The Li alloy may include, e.g., a Li-Al alloy, a Li-Sn alloy, a Li-In alloy, a Li-Ag alloy, a Li-Au alloy, a Li-Zn alloy, a Li-Ge alloy, a Li-Si alloy, or the like. A suitable material alloyable with Li may be used. The second anode active material layer 23 may include, e.g., Li, one of the alloys above, or several kinds of alloys.

A thickness of the second anode active material layer 23 may be, e.g., in a range of about 1 µm to about 1,000 µm, about 1 µm to about 500 µm, about 1 um to about 200 µm, about 1 µm to about 150 µm, about 1 µm to about 100 µm, or about 1 µm to about 50 µm. If the second anode active material layer 23 were to be too thin, the second anode active material layer 23 could have a difficulty in performing a function as a Li reservoir. If the second anode active material layer 23 were to be too thick, the mass and volume of the all-solid-state secondary battery could increase and the cycle characteristics of the all-solid-state secondary battery could be rather degraded. The second anode active material layer 23 may be, e.g., a metal foil having a thickness within the ranges above.

In the unit cell 1a of the unit stack-cell structure, the second anode active material layer 23 may be, e.g., arranged between the anode current collector 21 and the anode active material layer 22 before assembling the unit stack-cell structure, or may be precipitated between the anode current collector 21 and the anode active material layer 22 after assembling the unit stack-cell structure by charging the all-solid-state secondary battery.

When the second anode active material layer 23 is arranged between the anode current collector 21 and the first anode active material layer 22 before assembling the unit stack-cell structure, the second anode active material layer 23 which a Li-including metal layer may serve as a Li reservoir. Accordingly, the cycle characteristics of the all-solid-state secondary battery including the second anode active material layer 23 may be further improved. In an implementation, before assembling the unit stack-cell structure, a lithium foil may be arranged between the anode current collector 21 and the anode active material layer 22.

When the second anode active material layer 23 is arranged by charging after assembling the unit stack-cell structure, the second anode active material layer 23 may not be included at the time of the assembly of the unit stack-cell structure, and thus the energy density of the unit stack-cell structure may increase. In an implementation, when the all-solid-state secondary battery is charged, the charging may be performed at a capacity beyond the charging capacity of the anode active material layer 22. In an implementation, the anode active material layer 22 may be overcharged. At the beginning of charging, Li may be occluded into the anode active material layer 22. In an implementation, the anode active material included in the anode active material layer 22 may form an alloy or compound with Li ions that have migrated from the cathode layer 10. When the charging is performed at a capacity beyond the capacity of the anode active material layer 22, e.g., Li may be precipitated on a rear surface of the anode active material layer 22, i.e., a surface between the anode current collector 21 and the anode active material layer 22. By the precipitated Li, a metal layer corresponding to the second anode active material layer 23 may be formed. The second anode active material layer 23 is a metal layer mainly consisting of Li (i.e., metallic Li). Such a result may be obtained, for example, when the anode active material included in the anode active material layer 22 consists of a material that forms an alloy or compound with Li. At the time of discharging, Li included in the anode active material layer 22 and the second anode active material layer 23 which is a metal layer may be ionized and migrate toward the cathode layer 10. Therefore, Li may be used as the anode active material in the all-solid-state secondary battery. In addition, the anode active material layer 22 may cover the second anode active material layer 23, and the anode active material layer 22 may serve as a protective layer for the second anode active material layer 23 which is a metal layer, and at the same time, may serve as a layer suppressing the precipitation growth of Li dendrites. Therefore, a short circuit and capacity degradation of the all-solid-state secondary battery may be suppressed, and consequently, the cycle characteristics of the all-solid-state secondary battery may be improved. In addition, when the second anode active material layer 23 is arranged by charging the all-solid-state secondary battery after assembly of the unit stack-cell structure, the anode current collector 21, the anode active material layer 22, and a region therebetween may be, e.g., Li-free regions that do not include Li in an initial state or in a post-discharge state of the all-solid-state secondary battery.

### [All-solid secondary battery]

The all-solid-state secondary battery according to an embodiment may include a plurality of stacked unit stack-cell structures, and each of the plurality of the stacked unit stack-cell structures may be bipolarly connected. In the all-solid-state secondary battery, a desired voltage may be designed by bipolarly connecting the unit stack-cell structures, and due to introduction of the elastic layer 40 in the unit stack-cell structure, a volume change in the entire cell may be suppressed.

The all-solid-state secondary battery may be applicable to a medium or large-sized battery or an energy storage system (ESS).

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### (Preparation of all-solid-state secondary battery)

### Example 1

### (Preparation of elastic layer)

As resin components, 70 parts by weight of n-butyl acrylate (hereinafter also referred to as 'BA'), 10 parts by weight of 2-hydroxyethyl acrylate (2-HEA), and 20 parts by weight of isobornyl acrylate were mixed in a reactor to prepare a resin mixture. To the resin mixture, 0.1 part by weight of azobisisobutyronitrile as a polymerization initiator and 150 parts by weight of ethyl acetate as a solvent were added and mixed. While stirring the resulting mixture, the temperature was raised to 75 °C, and a polymerization reaction was carried out. Additionally, a polymerization catalyst solution in which 0.1 part by weight of azobisisobutyronitrile was dissolved in 10 parts by weight of ethyl acetate was sequentially added to thereby complete polymerization over 8 hours at the same temperature. After completion of the polymerization, a diluting solvent (ethyl acetate) was added to the reaction solution to thereby prepare a solution having a solid content of about 35 wt% and containing a carboxyl group-free acrylic-based copolymer having a weight average molecular weight of 1 million.

Based on 100 parts by weight of the prepared acrylate copolymer solution having a weight average molecular weight of 1 million, 7 parts by weight of Expancel 551 DU 40 (by Akzo Nobel Chemicals) as a foaming agent and 0.2 parts by weight of isocyanate (e.g., xylylene diisocyanate (XDI), trade name' TAKENATE D110N' manufactured by Mitsui Chemical Polyurethane Company, molecular weight: 698, trifunctional crosslinking reagent, solid content concentration: 75 wt%) as a crosslinking reagent were added to the acrylic-based copolymer solution. Then, a PET release film was coated with the resultant mixture and dried at 150 °C for 5 minutes to thereby prepare a sheet-type elastic layer having a thickness of 300 µm.

### (Preparation of anode layer)

As an anode current collector, a Ni foil having a thickness of 10 µm was prepared. Also, CB particles having a primary particle diameter of about 30 nm and Ag particles having an average particle diameter of about 60 nm were prepared as anode active materials.

4 g of mixed powder obtained by mixing the CB particles and the Ag particles at a weight ratio of about 3:1 was put into a container, and 4 g of an NMP solution containing 7 wt% of a PVDF binder (#9300 of KUREHA CORPORATION) was added thereto to prepare a mixed solution. Then, a slurry was prepared by stirring the mixed solution while adding NMP little by little to the mixed solution. The slurry was applied onto an SUS sheet by using a bar coater, and the SUS sheet was dried in the air at 80 °C for 10 minutes to prepare a laminate. A laminate thus obtained was then dried in vacuum at 40 °C for 10 hours. The dried laminate was roll-pressed at a pressure of 300 MPa for 10 ms to flatten the surface of an anode active material layer of the laminate. As such, an anode layer was prepared by the above-described processes. Here, a thickness of the anode active material layer included in the anode layer was about 7 µm.

### (Preparation of cathode layer)

LiNi_{0.8}Co_{0.15}Mn_{1.05}O₂ (NCM) coated with Li₂O-ZrO₂ (LZO) was prepared as a cathode active material. The LZO-coated cathode active material was prepared according to the method disclosed in Korean Patent Application Publication No. 10-2016-0064942. Li₆PS₅Cl (D50=0.5 mm, crystalline), which is argyrodite-type crystal, was used as a solid electrolyte. A polytetrafluoroethylene (PTFE) binder (e.g., Teflon binder by DuPont Corporation) was prepared as a binder. Also, a carbon nanofiber (CNF) was prepared as a conductive agent. A mixture in which the materials above (i.e., cathode active material:solid electrolyte: conductive agent:binder=84:11.5:3:1.55 in weight ratio) were mixed with a xylene solvent was molded in a sheet form, and then vacuum-dried at 40 °C for 8 hours to thereby prepare a cathode active material layer. The cathode active material layer was then compressed on a cathode current collector consisting of a carbon-coated aluminum foil having a thickness of 18 µm to thereby prepare a cathode layer. Here, a thickness of the cathode layer was about 105 µm.

### (Preparation of solid electrolyte layer)

1.5 parts by weight of an acrylic binder was mixed with 98.5 parts by weight of Li₆PS₅Cl (D50=3 µm, crystalline) which is an argyrodite-type crystal solid electrolyte, to prepare a mixture. Subsequently, the prepared mixture was stirred while adding octyl acetate thereto to prepare a slurry. The slurry was then applied onto a non-woven fabric by using a bar coater, and dried in the air at 80 °C for 10 minutes to thereby obtain a laminate. The laminate was then dried in vacuum at 80 °C for 6 hours. As such, a solid electrolyte layer was prepared by the process described above.

### (Preparation of unit stack-cell structure)

First, the solid electrolyte layer was arranged on the cathode active material layer of the cathode layer, and an anode layer was arranged on the solid electrolyte layer so that the anode layer was in contact with the solid electrolyte layer. Then, a pressure was applied thereto to prepare two laminates as the basis of a unit cell. An elastic layer was arranged on the anode layer of one laminate for lamination. Next, another laminate was arranged so that an anode layer of the other laminate was in contact with the elastic layer, thereby preparing a stacked structure.

The prepared stacked structure was placed on a laminate film and subjected to plate press treatment for 30 min under a pressure of 0.5 N based on a torque wrench at 85 °C to thereby prepare a unit stack-cell structure. The prepared unit stack cell structure was then used as an all-solid-state secondary battery.

The all-solid-state secondary battery was placed in a test module and fixed with a force of 5,000 kgf, where 1 kgf = 9.81 N, and charge/discharge evaluation was performed thereon.

### Example 2

To prepare an elastic layer, first, a solvent-free acrylate mixed resin having a weight average molecular weight of 1.2 million was prepared. 4-hydroxybutyl acrylate (4-HBA) (by Osaka Organic Chemical) and 2-Ethylhexyl acrylate (2-EHA) (by LG Chemical) were mixed at a weight ratio of 30:70, and 0.01 parts by weight of a photoinitiator (e.g., Irgacure 651) was added thereto. Then, the resultant mixture was irradiated with UV light to thereby prepare a solvent-free acrylate mixed resin having a weight average molecular weight of 1.2 million.

Based on 100 parts by weight of the solvent-free acrylate mixed resin, 0.5 parts by weight of a photoinitiator (e.g., Irgacure 651), 0.3 parts by weight of a crosslinking agent (e.g., 1,6-hexanediol diacrylate (HDDA), by Sigma Aldrich), and 6 parts by weight of Expancel 551DU40 (by Akzo Nobel Chemicals) were mixed with the solvent-free acrylate mixed resin. Then, a general-purpose PET film treated with silicone release was coated with the resultant mixture, and 2,000 mj/cm² of UV was irradiated thereto. A sheet thus obtained was left at 150 °C for 5 minutes so that Expancel 551DU40 was expanded to prepare a sheet-type elastic layer having a thickness of about 300 µm.

An all-solid-state secondary battery was manufactured in the same manner as in Example 1, except that the elastic layer thus prepared was used.

### Example 3

To prepare an elastic layer, first, nitrogen was added to a mixture, which included 30 parts by weight of a propylene polyol having a weight average molecular weight of 4,000, 70 parts by weight of a polyether polyol (manufactured by Sanyo Kasei Kogyo Company, trade name "GP-3000", viscosity (at 25 °C) of 500 mPa·s, number of functional groups is 3, number average molecular weight of 3,000), and 11 parts by weight of an isocyanate crosslinking agent (BASF, Lupranate T80), at 100 cc/min for 5 minutes, and the resultant mixture was stirred. Then, a PET film was coated with the resultant mixture to form an elastic sheet, and the elastic sheet was heated at a temperature in a range of about 120 °C to about 200 °C to thereby prepare a sheet-type elastic layer having a thickness of 300 µm.

An all-solid-state secondary battery was manufactured in the same manner as in Example 1, except that the elastic layer thus prepared was used.

### Example 4

An elastic layer having a thickness of 300 µm was prepared by placing an acryl elastic sheet (by Youngwoo, BHF) having a thickness of 125 µm on both sides and attaching a urethane sheet (by Ventwin, Grade 2085) having a thickness of 50 µm therebetween.

An all-solid-state secondary battery was manufactured in the same manner as in Example 1, except that the elastic layer thus prepared was used.

### Example 5

An elastic layer was arranged under an anode layer of one laminate for lamination, and another laminate was arranged so that a cathode layer of the other laminate was in contact with the elastic layer. Then, an elastic layer of the same material was arranged on an anode layer of the other laminate for lamination to thereby prepare a stacked structure.

An all-solid-state secondary battery was manufactured in the same manner as in Example 1, except that the prepared stacked structure was compressed with a pressure of 15 N to prepare a unit stack-cell structure.

### Example 6

An all-solid-state secondary battery was manufactured in the same manner as in Example 5, except that the elastic layer of Example 2 was used as an elastic layer.

### Example 7

An all-solid-state secondary battery was manufactured in the same manner as in Example 5, except that the elastic layer of Example 3 was used as an elastic layer.

### Example 8

An all-solid-state secondary battery was manufactured in the same manner as in Example 5, except that the elastic layer of Example 4 was used as an elastic layer.

### Comparative Example 1

An all-solid-state secondary battery was manufactured in the same manner as in Example 1, except that a silicon rubber pad (As One, T3) having a thickness of 300 µm was used as an elastic layer.

### Comparative Example 2

An all-solid-state secondary battery was manufactured in the same manner as in Example 1, except that a PTFE sheet (Gore, SG05X-J) having a thickness of 300 µm was used as an elastic layer.

### Comparative Example 3

An all-solid-state secondary battery was manufactured in the same manner as in Example 1, except that a urethane pad (Main Elecom, M3) having a thickness of 300 µm was used as an elastic layer.

### Comparative Example 4

An all-solid-state secondary battery was manufactured in the same manner as in Example 1, except that an acryl adhesive sheet (3M, VHB) having a thickness of 300 µm was used as an elastic layer.

### Comparative Example 5

An all-solid-state secondary battery was manufactured in the same manner as in Example 5, except that a silicon pad (As One, T3) having a thickness of 300 µm was used as an elastic layer.

### Comparative Example 6

An all-solid-state secondary battery was manufactured in the same manner as in Example 5, except that a PTFE sheet (Gore, SG05X-J) having a thickness of 300 µm was used as an elastic layer.

### Comparative Example 7

An all-solid-state secondary battery was manufactured in the same manner as in Example 5, except that a urethane pad (Main Elecom, M3) having a thickness of 300 µm was used as an elastic layer.

### Comparative Example 8

An all-solid-state secondary battery was manufactured in the same manner as in Example 5, except that an acryl adhesive sheet (3M, VHB) having a thickness of 300 µm was used as an elastic layer.

### Evaluation Example 1: Measurement of physical properties of elastic layer

For the elastic layers used in Examples 1 to 4 and Comparative Examples 1 to 4, the physical properties were measured as follows, and the results are shown in Table 1.

### (1) Compressive strength

As a value at Compression Force Deflection (CFD) of 40%, the compressive strength refers to a value when the elastic layer was physically compressed by 40 %. By using a compression tester with a spherical jig having a diameter of 10 mm, a specimen was compressed by 40 % at a compression rate of 0.6 mm/min (10 um/sec), and a load was measured when reached to a thickness of 60 % of the original thickness and then was calculated according to Equation 1: 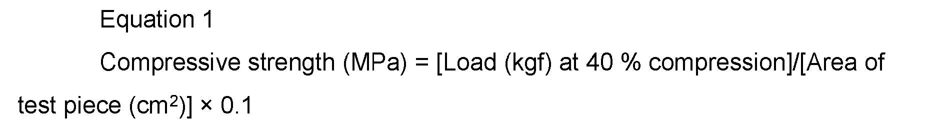 Compressive strength (MPa) = [Load (kgf) at 40 % compression]/[Area of test piece (cm2)] × 0.1

### (2) Stress relaxation rate and recovery rate

The elastic layer was first compressed at a compression rate of 0.6 mm/min (10 µm/sec) by using a compression tester with a spherical jig having a diameter of 10 mm until reached the load of 2.5 kgf, where 1 kgf = 9.81 N, and then from this point (referred to as an initial point), additional compression of 40 µm was performed on the first compressed elastic layer. The stress relaxation rate represents changes in stress for 60 seconds after completion of the compression, and is calculated according to Equation 2. The recovery rate represents changes in stress when the elastic layer was compressed with a pressure of 40 µm under the same conditions and then restored to the initial point right before the 40 µm compression, and was calculated using Equation 3.
1. After compressing at a rate of 10 µm/sec until reaching 2.5 kgf, a pressure of 40 µm was applied at the same rate.
2. The changes in stress were measured for 60 seconds at the point of the 40 µm compression, and a changing rate thereof was defined as stress relaxation rate.
3. When the pressed distance (40 µm) was restored after Steps 1 and 2 above, the stress was measured at the 0 µm point, and a difference in stress from the initial stress of 2.5 kgf was defined as the recovery rate. 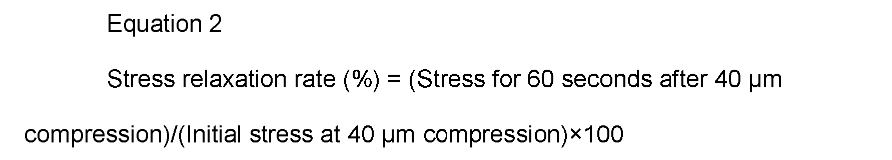 Stress relaxation rate (%) = (Stress for 60 seconds after 40 µm compression)/(Initial stress at 40 µm compression) × 100 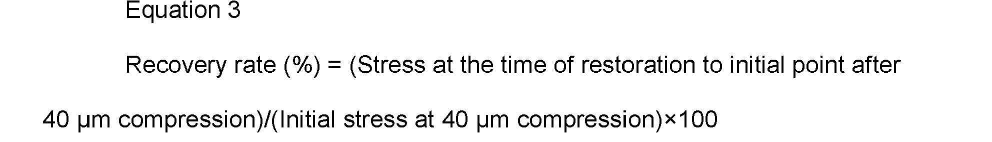 Recovery rate (%) = (Stress at the time of restoration to initial point after 40 µm compression)/(Initial stress at 40 µm compression) × 100

**Table 1**

| | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| Compressive strength (MPa) | 0.29 | 0.31 | 0.32 | 0.32 | 0.8 | 0.6 | 0.2 | 0.15 |
| Stress relaxation rate (%) | 14.7 | 12.9 | 8 | 12.2 | 1.5 | 10.3 | 3.1 | 14 |
| Recovery rate (%) | 66.5 | 75 | 84.8 | 71.5 | 98 | 71 | 96 | 60 |
| Sum (%) | 81.2 | 87.9 | 92.8 | 83.7 | 99.5 | 81.3 | 99.1 | 74 |

As shown in Table 1, as a result of measuring the physical properties of the elastic layers used in Examples 1 to 4, it may be seen that, compared to the elastic layers used in Comparative Examples 1 to 4, the elastic layers used in Examples 1 to 4 had enhanced compressive strength toward the compression direction and the stress relaxation rate and the recovery rates thereof were excellent to be used as buffer materials for the all-solid-state secondary battery.

### Evaluation Example 2: Charge/discharge test

Charge and discharge characteristics of the all-solid-state secondary batteries of Examples 1 to 8 and Comparative Examples 1 to 8 were evaluated by the following charge/discharge test. The charge/discharge test was performed by putting the all-solid-state secondary battery in a thermostatic bath at 45 °C.

First, each of the all-solid-state secondary batteries of Examples 1 to 8 and Comparative Examples 1 to 8 was charged with a constant current until reaching 4.25 V with a current of 0.1 C, followed by constant voltage charging until reaching a current of 0.05 C. After the charging was completed, the cell was subjected to a rest period for about 10 minutes, and then subjected to constant current discharge at a current of 0.1C until reaching a voltage of 2.5 V.

The charge/discharge cycle was repeated 300 times in total to evaluate the charge/discharge efficiency and the occurrence of a short circuit. The charge/discharge efficiency was evaluated in terms of a capacity retention rate represented by Equation 4 after the 300 cycles. 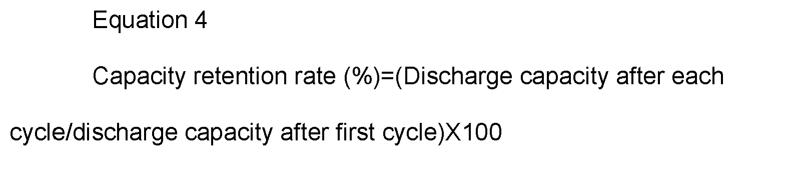 Capacity retention rate (%) = (Discharge capacity after each cycle/discharge capacity after first cycle) × 100

In Examples 1 to 8, the charge/discharge efficiency achieved at least 90 % during 300 cycles.

In Comparative Example 1, a short circuit occurred in less than 50 cycles.

In Comparative Example 2, 300 cycles were achieved, but the charge/discharge efficiency was only 88 %.

In Comparative Example 3, a short circuit occurred in less than 50 cycles.

In Comparative Example 4, a short circuit occurred in less than 50 cycles.

In Comparative Example 5, a short circuit occurred in less than 30 cycles.

In Comparative Example 6, 300 cycles were achieved, but the charge/discharge efficiency was only 88 %.

In Comparative Example 7, a short circuit occurred in less than 50 cycles.

In Comparative Example 8, a short circuit occurred in less than 50 cycles.

According to the charge/discharge test, it was seen that the all-solid-state secondary batteries of Examples 1 to 8 were provided with the elastic layer having excellent compressive strength and stress relaxation rate, so that the coulombic efficiency was improved without the occurrence of a short circuit even in the volume changes of the cell by the charging and discharging.

By way of summation and review, an all-solid-state secondary battery using a solid electrolyte, such as a sulfide solid electrolyte, may not be used when exposed to the atmosphere due to the nature of the solid electrolyte, and may be blocked from the atmosphere. In this regard, an all-solid-state secondary battery may be prepared by which an all-solid-state secondary battery is accommodated in an exterior body using a laminate film or a material having rigidity, so that the all-solid-state secondary battery may be blocked from the atmosphere.

However, when an all-solid-state secondary battery laminate is accommodated in an exterior body, an all-solid-state secondary battery may be compressed by using a laminate film after lamination, or a pressure may be applied to an all-solid-state secondary battery, stress may be transferred to a solid electrolyte, and thus cracks could occur, thereby causing a short circuit. In addition, a thickness of an anode may vary in a state where stress is accumulated after pressurization or in a charging/discharging environment. Here, cracks of a solid electrolyte could occur, resulting in occurrence of a short circuit.

In particular, if an all-solid-state secondary battery were not uniformly pressurized from the outside during discharging, the movement speed of lithium ions could decrease and the discharge efficiency could be accordingly lowered. Also, if an all-solid-state secondary battery were locally pressurized, lithium ions could move to the pressurized portion and the discharge efficiency could be accordingly lowered.

According to the one or more embodiments, a unit stack-cell structure may distribute the stress applied to a solid electrolyte during pressurization of an all-solid-state secondary battery including the same so that the pressure may be applied uniformly. Also, due to excellent restoring force under charge/discharge condition, a contact surface between an anode and the solid electrolyte may be uniformly pressurized during discharge, thereby increasing discharge efficiency. In addition, an all-solid-state secondary battery having high coulombic efficiency, even when a thickness of an anode active material layer varies due to charging and discharging, may be provided.

One or more embodiments may provide a unit stack-cell structure having high coulombic efficiency even when a thickness of an anode varies by charging and discharging.

## Claims

1. A unit stack-cell structure, comprising a plurality of stacked unit cells (1), each unit cell of the plurality of stacked unit cells including a laminate in which a cathode layer (10); a solid electrolyte layer (30); an anode layer (20); and an elastic layer (40) are sequentially arranged,
**characterized in that**
the elastic layer (40) has a compressive strength of greater than or equal to 0.28 MPa and less than 0.6 MPa in a compressibility interval in a range of 40 % to 70 %,
wherein the compressive strength refers to a value when the elastic layer (40) is physically compressed by 40 % at a compression rate of 0.6 mm/min using a compression tester with a spherical jig having a diameter of 10 mm and a load is measured when reached to a thickness of 60 % of the original thickness and the compressive strength is calculated according to Equation 1: 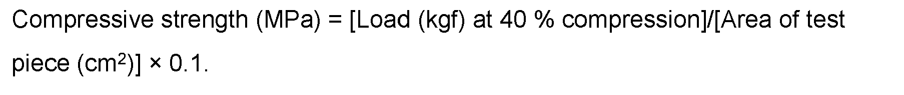 Compressive strength (MPa) = [Load (kgf) at 40 % compression]/[Area of test piece (cm2)] × 0.1.

2. The unit stack-cell structure as claimed in claim 1, wherein the elastic layer (40) has a compressive strength of greater than or equal to 0.28 MPa and less or equal to 0.35 MPa at compressibility of 40 %.

3. The unit stack-cell structure as claimed in claims 1 or 2, wherein the elastic layer (40) has a stress relaxation rate in a range of 5 % to 20 %, a recovery rate of greater than or equal to 60 %, and a sum of the stress relaxation rate and the recovery rate is in a range of 78 % to 95 %,
wherein the stress relaxation rate and the recovery rate are measured utilizing the procedures and equipment as described in the description.

4. The unit stack-cell structure as claimed in claim 3, wherein the elastic layer (40) has a stress relaxation rate in a range of 6.5 % to 15 %, and/or the elastic layer has a recovery rate of greater than or equal to 70 %.

5. The unit stack-cell structure as claimed in any one of the preceding claims, wherein the elastic layer (40) is a compressive pad consisting of an elastic material.

6. The unit stack-cell structure as claimed in claim 5, wherein the elastic material includes a polyurethane, natural rubber, spandex, isobutylene isoprene rubber (IIR), fluoroelastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, or a copolymer thereof.

7. The unit stack-cell structure as claimed in any one of the preceding claims, wherein the elastic layer is a compressive pad to which pressure is applied to have a thickness of 40 % to 90 % of the initial thickness before the pressure is applied, and/or
a thickness of the elastic layer (40) is in a range of 200 % to 500 % of a thickness of a lithium precipitation layer formed in the anode layer (20) during charging of an all-solid secondary battery, wherein the thickness of the precipitation layer is determined according to the amount of lithium migrating from the cathode layer (10) to the anode layer (20).

8. The unit stack-cell structure as claimed in any one of the preceding claims, wherein the solid electrolyte layer (30) includes a sulfide solid electrolyte.

9. The unit stack-cell structure as claimed in claim 8, wherein the sulfide solid electrolyte includes Li₂S-P₂S₅, Li₂S-P₂S₅-LiX, in which X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, in which m and n are each a positive number, and Z is Ge, Zn, or Ga, Li₂S-GeS₂, Li₂S-SiS₂-LiₚMO_{q}, in which p and q are each a positive number, and M is P, Si, Ge, B, Al, Ga, or In, Li₇₋ₓPS₆₋ₓClₓ, 0≤x≤2, Li₇₋ₓPS₆₋ₓBrₓ, in which 0≤x≤2, or Li₇₋ₓPS₆₋ₓIₓ, in which 0≤x≤2.

10. The unit stack-cell structure as claimed in claim 8, wherein the sulfide solid electrolyte is an argyrodite-type sulfide solid electrolyte including Li₆PS₅Cl, Li₆PS₅Br, or Li₆PS₅I.

11. The unit stack-cell structure as claimed in any one of the preceding claims, wherein:
the anode layer (20) includes an anode active material and a binder,
the anode active material has a particle shape, and
the anode active material has an average particle diameter D50 of equal to or less than 4 µm measured by using a laser particle size distribution meter.

12. The unit stack-cell structure as claimed in claim 11, wherein:
the anode active material includes a carbon anode active material or a metallic or metalloid anode active material,
the carbon anode active material includes amorphous carbon, and
the metallic or metalloid anode active material includes gold (Au), platinum (Pt), palladium (Pd), silicon (Si), silver (Ag), aluminum (Al), bismuth (Bi), tin (Sn), or zinc (Zn).

13. The unit stack-cell structure as claimed in claim 11 or 12, wherein:
the anode active material includes a mixture of a first particle including amorphous carbon and a second particle including a metal or a metalloid, and
an amount of the second particle is in a range of about 8 wt% to about 60 wt%, based on a total weight of the mixture.

14. The unit stack-cell structure as claimed in any one of the preceding claims, wherein:
the unit stack-cell structure has a structure in which a plurality of bi-cells are stacked, and
in each bi-cell, a pair of unit cells are symmetrically arranged on both sides of a cathode current collector.

15. An all-solid-state secondary battery comprising a plurality of the stacked unit stack-cell structures as claimed in claim 1, wherein the stacked unit stack-cell structures are bipolarly connected to each other.

## Patentansprüche

1. Einheitsstapelzellenstruktur, umfassend eine Vielzahl von gestapelten Einheitszellen (1), wobei jede Einheitszelle der Vielzahl von gestapelten Einheitszellen ein Laminat beinhaltet, in dem eine Kathodenschicht (10); eine Festelektrolytschicht (30); eine Anodenschicht (20) und eine elastische Schicht (40) sequenziell angeordnet sind,
**dadurch gekennzeichnet, dass**
die elastische Schicht (40) eine Druckfestigkeit von größer als oder gleich 0,28 MPa und weniger als 0,6 MPa in einem Kompressibilitätsintervall in einem Bereich von 40 % bis 70 % aufweist,
wobei sich die Druckfestigkeit auf einen Wert bezieht, wenn die elastische Schicht (40) unter Verwendung eines Kompressionstestgeräts mit einer kugelförmigen Spannvorrichtung mit einem Durchmesser von 10 mm bei einer Kompressionsrate von 0,6 mm/min um 40 % physikalisch komprimiert wird und eine Last gemessen wird, wenn eine Dicke von 60 % der ursprünglichen Dicke erreicht ist, und die Druckfestigkeit gemäß Gleichung 1 berechnet wird:$Druckfestigkeit \left(MPa\right) = \left[Last\left(kgf\right)bei 40 % Kompression\right] / \left[Fläche des Prüfkörpers\left({cm}^{2}\right)\right] \times 0 , 1 .$

2. Einheitsstapelzellenstruktur nach Anspruch 1, wobei die elastische Schicht (40) bei einer Kompressibilität von 40 % eine Druckfestigkeit von größer als oder gleich 0,28 MPa und kleiner als oder gleich 0,35 MPa aufweist.

3. Einheitsstapelzellenstruktur nach Anspruch 1 oder 2, wobei die elastische Schicht (40) eine Spannungsrelaxationsrate in einem Bereich von 5 % bis 20 % aufweist, eine Wiederherstellungsrate von größer als oder gleich 60 % aufweist und eine Summe aus der Spannungsrelaxationsrate und der Wiederherstellungsrate in einem Bereich von 78 % bis 95 % liegt,
wobei die Spannungsrelaxationsrate und die Wiederherstellungsrate unter Verwendung der in der Beschreibung beschriebenen Prozeduren und Geräte gemessen werden.

4. Einheitsstapelzellenstruktur nach Anspruch 3, wobei die elastische Schicht (40) eine Spannungsrelaxationsrate in einem Bereich von 6,5 % bis 15 % aufweist, und/oder die elastische Schicht eine Wiederherstellungsrate von größer als oder gleich 70 % aufweist.

5. Einheitsstapelzellenstruktur nach einem der vorhergehenden Ansprüche, wobei die elastische Schicht (40) ein aus einem elastischen Material bestehendes Kompressionspad ist.

6. Einheitsstapelzellenstruktur nach Anspruch 5, wobei das elastische Material ein Polyurethan, Naturkautschuk, Spandex, Isobuten-Isopren-Kautschuk (IIR), Fluorelastomer, Ethylen-Propylen-Kautschuk (EPR), Styrol-Butadien-Kautschuk (SBR), Chloropren, Elastin, Epichlorhydrinkautschuk, Nylon, Terpen, Isoprenkautschuk, Polybutadien, Nitrilkautschuk, thermoplastisches Elastomer, Silikonkautschuk, Ethylen-Propylen-Dien-Kautschuk (EPDM), Ethylenvinylacetat (EVA), halogenierten Butylkautschuk, Neopren oder ein Copolymer davon umfasst.

7. Einheitsstapelzellenstruktur nach einem der vorhergehenden Ansprüche, wobei die elastische Schicht ein Kompressionspad ist, auf das Druck ausgeübt wird, sodass es eine Dicke von 40 % bis 90 % der ursprünglichen Dicke vor dem Ausüben des Drucks aufweist, und/oder
eine Dicke der elastischen Schicht (40) in einem Bereich von 200 % bis 500 % einer Dicke einer in der Anodenschicht während des Ladens einer Festkörper-Sekundärbatterie ausgebildeten Lithiumausfällungsschicht (20) liegt, wobei die Dicke der Ausfällungsschicht gemäß einer Menge an Lithium bestimmt wird, die von der Kathodenschicht (10) zu der Anodenschicht (20) wandert.

8. Einheitsstapelzellenstruktur nach einem der vorhergehenden Ansprüche, wobei die Festelektrolytschicht (30) einen Sulfid-Festelektrolyten beinhaltet.

9. Einheitsstapelzellenstruktur nach Anspruch 8, wobei der Sulfid-Festelektrolyt Li₂S-P₂S₅, Li₂S-P₂S₅-LiX, wobei X ein Halogenelement ist, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wobei m und n jeweils eine positive Zahl sind und Z für Ge, Zn oder Ga steht, Li₂S-GeS₂, Li₂S-SiS₂-LiₚMO_{q}, wobei p und q jeweils eine positive Zahl sind und M für P, Si, Ge, B, Al, Ga oder In steht, Li₇₋ₓPS₆₋ₓClₓ, 0≤x≤2, Li₇₋ₓPS₆₋ₓBrₓ, wobei 0≤x≤2, oder Li₇₋ₓPS₆₋ₓIₓ, wobei 0≤x≤2, beinhaltet.

10. Einheitsstapelzellenstruktur nach Anspruch 8, wobei der Sulfid-Festelektrolyt ein Argyrodit-Sulfid-Festelektrolyt ist, der Li₆PS₅Cl, Li₆PS₅Br oder Li₆PS₅I beinhaltet.

11. Einheitsstapelzellenstruktur nach einem der vorhergehenden Ansprüche, wobei:
die Anodenschicht (20) ein Anodenaktivmaterial und ein Bindemittel umfasst,
das Anodenaktivmaterial eine Partikelform aufweist, und
das Anodenaktivmaterial einen mittleren Partikeldurchmesser D50 von gleich oder kleiner als 4 µm aufweist, gemessen mit einem Laserpartikelgrößenverteilungsmessgerät.

12. Einheitsstapelzellenstruktur nach Anspruch 11, wobei:
das Anodenaktivmaterial ein Kohlenstoff-Anodenaktivmaterial oder ein Metall- oder Halbmetall-Anodenaktivmaterial beinhaltet,
das Kohlenstoff-Anodenaktivmaterial amorphen Kohlenstoff beinhaltet, und
das Metall- oder Halbmetall-Anodenaktivmaterial Gold (Au), Platin (Pt), Palladium (Pd), Silizium (Si), Silber (Ag), Aluminium (AI), Wismut (Bi), Zinn (Sn) oder Zink (Zn) beinhaltet.

13. Einheitsstapelzellenstruktur nach Anspruch 11 oder 12, wobei:
das Anodenaktivmaterial ein Gemisch aus einem ersten Partikel, das amorphen Kohlenstoff enthält, und einem zweiten Partikel, das ein Metall oder ein Halbmetall enthält, beinhaltet, und
eine Menge des zweiten Partikels in einem Bereich von etwa 8 Gew.-% bis etwa 60 Gew.-% basierend auf einem Gesamtgewicht des Gemischs liegt.

14. Einheitsstapelzellenstruktur nach einem der vorhergehenden Ansprüche, wobei:
die Einheitsstapelzellenstruktur eine Struktur aufweist, in der eine Vielzahl von Bi-Zellen gestapelt ist, und
in jeder Bi-Zelle ein Paar von Einheitszellen symmetrisch auf beiden Seiten eines Kathodenstromkollektors angeordnet ist.

15. Festkörper-Sekundärbatterie, umfassend eine Vielzahl der gestapelten Einheitsstapelzellenstrukturen nach Anspruch 1, wobei die gestapelten Einheitsstapelzellenstrukturen eine bipolar miteinander verbunden sind.

## Revendications

1. Structure d'empilement de cellules unitaires, comportant une pluralité de cellules unitaires empilées (1), chaque cellule unitaire de la pluralité de cellules unitaires empilées incluant un stratifié dans lequel une couche de cathode (10) ; une couche d'électrolyte solide (30) ; une couche d'anode (20) ; et une couche élastique (40) sont agencées séquentiellement,
**caractérisée en ce que**
la couche élastique (40) présente une résistance à la compression supérieure ou égale à 0,28 MPa et inférieure à 0,6 MPa dans un intervalle de compressibilité dans une plage de 40 % à 70 %,
dans laquelle la résistance à la compression fait référence à une valeur lorsque la couche élastique (40) est physiquement comprimée de 40 % à un taux de compression de 0,6 mm/min à l'aide d'un testeur de compression avec un gabarit sphérique présentant un diamètre de 10 mm et une charge est mesurée lorsqu'elle est atteinte à une épaisseur de 60 % de l'épaisseur d'origine et la résistance à la compression est calculée selon l'équation 1 : 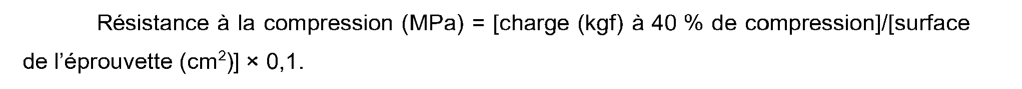 Résistance à la compression (MPa) = [charge (kgf) à 40 % de compression]/[surface de l'éprouvette (cm2)] × 0,1.

2. Structure d'empilement de cellules unitaires selon la revendication 1, dans laquelle la couche élastique (40) présente une résistance à la compression supérieure ou égale à 0,28 MPa et inférieure ou égale à 0,35 MPa à une compressibilité de 40 %.

3. Structure d'empilement de cellules unitaires selon les revendications 1 ou 2, dans laquelle la couche élastique (40) présente un taux de relaxation de contrainte dans une plage de 5 % à 20 %, un taux de récupération supérieur ou égal à 60 %, et une somme du taux de relaxation de contrainte et du taux de récupération est dans une plage de 78 % à 95 %, dans laquelle le taux de relaxation de contrainte et le taux de récupération sont mesurés en utilisant les procédures et l'équipement tels que décrits dans la description.

4. Structure d'empilement de cellules unitaires selon la revendication 3, dans laquelle la couche élastique (40) présente un taux de relaxation de contrainte dans une plage de 6,5 % à 15 %, et/ou la couche élastique présente un taux de récupération supérieur ou égal à 70 %.

5. Structure d'empilement de cellules unitaires selon l'une quelconque des revendications précédentes, dans laquelle la couche élastique (40) est un patin de compression constitué d'un matériau élastique.

6. Structure d'empilement de cellules unitaires selon la revendication 5, dans laquelle le matériau élastique comporte un polyuréthane, un caoutchouc naturel, un élasthanne, un caoutchouc isobutylène-isoprène (IIR), un fluoroélastomère, un caoutchouc éthylène-propylène (EPR), un caoutchouc styrène-butadiène (SBR), un chloroprène, une élastine, un caoutchouc d'épichlorhydrine, un nylon, un terpène, un caoutchouc isoprène, un polybutadiène, un caoutchouc nitrile, un élastomère thermoplastique, un caoutchouc de silicone, un caoutchouc éthylène-propylène-diène (EPDM), un éthylène-acétate de vinyle (EVA), un caoutchouc butyle halogéné, un néoprène ou un copolymère de ceux-ci.

7. Structure d'empilement de cellules unitaires selon l'une quelconque des revendications précédentes, dans laquelle la couche élastique est un patin de compression sur lequel une pression est appliquée de manière à obtenir une épaisseur de 40 % à 90 % de l'épaisseur initiale avant l'application de la pression, et/ou
une épaisseur de la couche élastique (40) est dans une plage de 200 % à 500 % d'une épaisseur d'une couche de précipitation de lithium formée dans la couche d'anode (20) lors de la charge d'une batterie secondaire entièrement solide, dans laquelle l'épaisseur de la couche de précipitation est déterminée en fonction de la quantité de lithium migrant de la couche de cathode (10) vers la couche d'anode (20).

8. Structure d'empilement de cellules unitaires selon l'une quelconque des revendications précédentes, dans laquelle la couche d'électrolyte solide (30) comporte un électrolyte solide au sulfure.

9. Structure d'empilement de cellules unitaires selon la revendication 8, dans laquelle l'électrolyte solide au sulfure comporte Li₂S-P₂S₅, Li₂S-P₂S₅-LiX, où X est un élément halogène, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCI, Li₂S-SiS₂-B₂S₃-LiI, Li₂S-SiS₂-P₂S₅-LiI, Li₂S-B₂S₃, Li₂S-P₂S₅-ZₘSₙ, où m et n sont chacun un nombre positif, et Z est Ge, Zn ou Ga, Li₂S-GeS₂, Li₂S-SiS₂-LiₚMO_{q}, où p et q sont chacun un nombre positif, et M est P, Si, Ge, B, AI, Ga, ou In, Li₇₋ₓPS₆₋ₓClₓ, 0 ≤ x ≤ 2, Li₇₋ₓPS₆₋ₓBrₓ, où 0 ≤ x ≤ 2, ou Li₇₋ₓPS₆₋ₓIₓ, où 0 ≤ x ≤2.

10. Structure d'empilement de cellules unitaires selon la revendication 8, dans laquelle l'électrolyte solide au sulfure est un électrolyte solide au sulfure de type argyrodite incluant Li₆PS₅Cl, Li₆PS₅Br ou Li₆PS₅I.

11. Structure d'empilement de cellules unitaires selon l'une quelconque des revendications précédentes, dans laquelle :
la couche d'anode (20) comporte un matériau actif d'anode et un liant,
le matériau actif d'anode présente une forme de particules, et
le matériau actif d'anode présente un diamètre moyen de particule D50 inférieur ou égal à 4 µm mesuré à l'aide d'un appareil de mesure de granulométrie laser.

12. Structure d'empilement de cellules unitaires selon la revendication 11, dans laquelle :
le matériau actif d'anode comporte un matériau actif d'anode de carbone ou un matériau actif d'anode métallique ou métalloïde,
le matériau actif d'anode de carbone comporte du carbone amorphe, et
le matériau actif d'anode métallique ou métalloïde comporte de l'or (Au), du platine (Pt), du palladium (Pd), du silicium (Si), de l'argent (Ag), de l'aluminium (AI), du bismuth (Bi), de l'étain (Sn) ou du zinc (Zn).

13. Structure d'empilement de cellules unitaires selon la revendication 11 ou 12, dans laquelle :
le matériau actif d'anode comporte un mélange d'une première particule incluant du carbone amorphe et d'une deuxième particule incluant un métal ou un métalloïde, et
une quantité de la deuxième particule est dans une plage d'environ 8 % en poids à environ 60 % en poids, par rapport à un poids total du mélange.

14. Structure d'empilement de cellules unitaires selon l'une quelconque des revendications précédentes, dans laquelle :
la structure d'empilement de cellules unitaires présente une structure dans laquelle une pluralité de bicellules sont empilées, et
dans chaque bicellule, une paire de cellules unitaires est agencée symétriquement des deux côtés d'un collecteur de courant de cathode.

15. Batterie secondaire entièrement solide comportant une pluralité des structures d'empilement de cellules unitaires empilées selon la revendication 1, dans laquelle les structures d'empilement de cellules unitaires empilées sont connectées bipolairement les unes aux autres.
